# EUROPÄISCHE PATENTANMELDUNG

(11) **EP 2 000 908 A1**
(43) Veröffentlichungstag der Anmeldung: **10.12.2008**
(21) Anmeldenummer: 08103841.6
(22) Anmeldetag: 06.05.2008
(51) Int. Cl.: G06F 9/50, G06F 3/023

(54) **Verfahren zur Datenübertragung zwischen Betriebssysteminstanzen auf einem Servercomputer und netzwerkfähigen Peripheriegeräten**

(30) Priorität: 04.06.2007 DE 102007025989
(71) Anmelder: Fujitsu Siemens Computers GmbH, 80807 München (DE)
(72) Erfinder: Stotz, Andreas, 80335, München (DE)
(74) Vertreter: Epping - Hermann - Fischer

(57) **Zusammenfassung**

Die Erfindung betrifft ein Verfahren zur Datenübertragung in einem System mit einem Computer (1) und einem Peripheriegerät (9), die über ein Netzwerk (8) miteinander verbunden sind. Der Computer weist Hardwareressourcen (2), darunter eine Netzwerkschnittstelle (2.3), und eine Ablaufsteuerung (4) auf, die dazu eingerichtet ist, ein virtuelles Maschinensystem bereitzustellen, indem sie die Hardwareressourcen (2) einschließlich der Netzwerkschnittstelle (2.3) auf logische Schnittstellen (5, 5.3) in virtuellen Maschinen (4) abbildet. Das Verfahren zeichnet sich durch die folgenden Schritte aus: Ein im Computer (1) vorgesehener Peripheriegeräteadapter (10) wird durch die Ablaufsteuerung (3) auf eine logische Peripheriegeräteschnittstelle (11) in einer der virtuellen Maschinen (4) abgebildet und es werden Daten zwischen dem Peripheriegerät (9) und der virtuellen Maschine (4) über das Netzwerk (8), den Peripheriegeräteadapter (10) und die logische Peripheriegeräteschnittstelle (11) unter Umgehung der die Netzwerkschnittstelle (2.3) in den virtuellen Maschinen (4) abbildenden logischen Schnittstellen (5.3) ausgetauscht.

## Beschreibung

Die Erfindung betrifft ein Verfahren zur Datenübertragung zwischen einer virtuellen Maschine eines Computers und einem über ein Netzwerk anschließbaren Peripheriegerät. Die Erfindung betrifft weiterhin eine Ablaufsteuerung für ein virtuelles Maschinensystem zur Durchführung eines solchen Verfahrens zur Datenübertragung.

Auf Computern mit virtuellen Maschinen, oft auch als virtuelle Maschinensysteme bezeichnet, können verschiedene Anwender Aufgaben unabhängig und getrennt voneinander bearbeiten. In virtuelle Maschinensystemen werden die gemeinsam genutzten Hardwareressourcen des Computers auf mehrere virtuelle Umgebungen, die sogenannten virtuelle Maschinen, aufgeteilt. Für den oder die Anwender stellen sich die virtuellen Maschinen als eigenständige, unabhängige Einheiten dar. Unabhängig bedeutet in diesem Zusammenhang, dass auf den einzelnen virtuellen Maschinen unterschiedliche Betriebssysteme mit verschiedensten Applikationen, Programmen oder Skripten ausgeführt werden können. Die virtuellen Maschinen sind dabei gegeneinander abgeschottet, so dass ein Zugriff von einer virtuellen Maschine auf die von einer anderen virtuellen Maschine genutzten Ressourcen (zum Beispiel Speicherbereich) nicht möglich ist.

Kernelement eines virtuellen Maschinensystems ist eine Ablaufsteuerung, die die Hardwareressourcen des Computers über logische Schnittstellen den einzelnen virtuellen Maschinen bereitstellt. Ein innerhalb einer virtuellen Maschine vorgesehenes Betriebssystem oder Anwendungsprogramm greift auf die von der Ablaufsteuerung bereitgestellten logischen Schnittstellen in der gleichen Weise zu, wie ein unmittelbar auf dem Computer ausgeführtes Betriebssystem oder Anwendungsprogramm auf die Hardwareressourcen zugreifen würde. In diesem Sinne ist die Ablaufsteuerung für die virtuelle Maschinen transparent.

Grundsätzlich lassen sich zwei verschiedene Typen von virtuellen Maschinensystemen unterscheiden. Bei einem ersten Typ von virtuellen Maschinensystemen greift die Ablaufsteuerung direkt, oder gegebenenfalls unter Zuhilfenahme eines BIOS (Basic Input Output System), auf die Hardwareressourcen zu. Dieses wird als non-hosted System bezeichnet. Die Ablaufsteuerung wird in einem solchen Fall auch Hypervisor genannt. Ein Beispiel für ein non-hosted System ist das VM2000 System der Firma Fujitsu-Siemens.

Im anderen Fall, der als hosted System bezeichnet wird, ist die Ablaufsteuerung ein Anwendungsprogramm innerhalb einer unmittelbar auf dem Computer ausgeführten Betriebssystemumgebung. Dieser Ansatz bietet den Vorteil, dass die Ablaufsteuerung sich beim Zugriff auf die Hardwareressourcen der vom Betriebssystem bereitgestellten Schnittstellen, z.B. dem API (Application Programming Interface), bedienen kann. Nachteilig gegenüber einem non-hosted System kann jedoch sein, dass Beschränkungen der als host ausgeführten Betriebssystemumgebung für alle virtuellen Maschinen gelten. Ein Beispiel eines hosted Systems stellt die virtuelle Maschinenumgebung Virtual Server der Firma Microsoft dar.

Insbesondere bei großen non-hosted virtuellen Maschinensystemen werden die einzelnen virtuellen Maschinen üblicherweise von unterschiedlichen, räumlich vom virtuellen Maschinensystem entfernt arbeitenden Anwendern genutzt. Die zu dieser Fernbenutzung beim Anwender notwendigen Peripheriegeräte wie Bildschirm, Tastatur, Maus aber auch Audioein- oder - ausgabeeinheiten oder Drucker sind zu dem Zweck an einen lokalen Computer angeschlossen. Die Übertragung von Ein- und Ausgabedaten zwischen dem lokalen Computer und der entsprechenden virtuellen Maschine im zentralen virtuellen Maschinensystem erfolgt über geeignete Netzwerke. Als Computer wird beim Anwender häufig ein Standard-PC eingesetzt oder ein so genannter Thin Client, der im Wesentlichen jedoch ebenfalls ein Standard-PC in einer Minimalausstattung und extrem kompakter Bauweise ist. Zur Übertragung der Ein- und Ausgabedaten sind verschiedene, meist proprietäre Protokolle bekannt. Manche Betriebssysteme stellen spezielle Protokolle bereit, um die Arbeitsumgebung (Desktop) der virtuellen Maschine auf den lokalen Computer zu übertragen, zum Beispiel RDP (Remote Desktop Protokoll) für Windows XP und XDMCP (X Display Manager Control Protocol) für Linux. Der lokale Computer führt zu diesem Zweck eine passende Anwendung aus. Weiterhin müssen alle zur Ansteuerung der Peripheriegeräte notwendigen Softwarebausteine zur Ansteuerung der Peripheriegeräte (Treiber) auf dem lokalen Computer installiert und konfiguriert sein.

Bekannte Lösungen, um entfernt von dem virtuellen Maschinensystem einen lokalen Arbeitsplatz mit entsprechenden Peripheriegeräten über ein Netzwerk bereitzustellen, erfordern stets einen lokalen Computer mit speziellen Anwendungen und Treibern zur Nutzung der lokalen Peripheriegeräte.

Es ist daher eine Aufgabe der vorliegenden Erfindung, ein Verfahren zur Datenübertragung zwischen den virtuellen Maschinen eines virtuellen Maschinensystems und über ein Netzwerk angebundenen Peripheriegeräten zu schaffen, bei dem auf den Einsatz eines lokalen Computers verzichtet werden kann. Es ist eine weitere Aufgabe, eine zur Ausführung eines solchen Verfahrens geeignete Ablaufsteuerung für ein virtuelles Maschinensystem zu schaffen.

Diese Aufgaben werden durch die Merkmale der unabhängigen Patentansprüche gelöst. Vorteilhafte Weiterbildungen sind in den jeweiligen abhängigen Ansprüchen angeführt.

Gemäß einem ersten Aspekt der Erfindung wird die Aufgabe durch ein Verfahren zur Datenübertragung in einem System mit einem Computer und einem Peripheriegerät gelöst, wobei der Computer Hardwareressourcen, darunter eine Netzwerkschnittstelle, und eine Ablaufsteuerung aufweist. Die Ablaufsteuerung ist dabei dazu eingerichtet, ein virtuelles Maschinensystem bereitzustellen indem sie die Hardwareressourcen einschließlich der Netzwerkschnittstelle auf logische Schnittstellen in virtuellen Maschinen abbildet. Der Computer und das Peripheriegerät sind mit einem Netzwerk verbunden. Das Verfahren umfasst die folgenden Schritte: Ein im Computer vorgesehener Peripheriegeräteadapter wird auf eine logische Peripheriegeräteschnittstelle in einer der virtuellen Maschinen durch die Ablaufsteuerung abgebildet. Danach werden zwischen dem Peripheriegerät und der virtuellen Maschine über das Netzwerk, den Peripheriegeräteadapter und die logische Peripheriegeräteschnittstelle unter Umgehung der die Netzwerkschnittstelle in den virtuellen Maschinen abbildenden logischen Schnittstellen Daten ausgetauscht.

Bei dem Verfahren werden Peripheriegeräte auf der Ebene der Ablaufsteuerung durch die Peripheriegeräteadapter repräsentiert. Diese Peripheriegeräteadapter werden dann analog zu lokal vorhandenen Hardwareressourcen in den einzelnen virtuellen Maschinen abgebildet. Die Übertragung von Ein- und Ausgabedaten in ein Betriebssystem oder ein Anwendungsprogramm der virtuellen Maschinen erfolgt somit auf genau dieselbe Art, wie Daten von lokal an den Computer angeschlossenen Peripheriegeräten übergeben würden. Da auf diese Weise kein spezielles Protokoll zur Übertragung und keine eigens zu dem Zweck der Fernbenutzung vorgesehene Schnittstelle im Betriebssystem oder dem Anwendungsprotokoll benötigt wird, ist auf der Seite des Peripheriegeräts, also am Arbeitsplatz eines Benutzers, keine entsprechende Datenumwandlung erforderlich. Der dafür üblicherweise benötigte Standard-PC oder Thin-Client kann deswegen bei dem anmeldungsgemäßen Verfahren entfallen. Am Benutzerarbeitsplatz können Peripheriegeräte eingesetzt werden, die auf Standard-Komponenten basieren und zusätzlich lediglich eine Netzwerkschnittstelle aufweisen müssen.

Als weiterer Vorteil ergibt sich, dass auch Betriebssysteme, die die gemäß dem Stand der Technik erforderliche spezielle Schnittstelle zur Fernbenutzung nicht aufweisen, mit dem erfindungsgemäßen Verfahren mit entfernten, über ein Netzwerk angebundenen Peripheriegeräten betrieben werden können. Das Verfahren bedient sich der logischen Schnittstellen eines Betriebssystems, das auch lokale, direkt angeschlossene Peripheriegeräte nutzen würden. Wenn eine Schnittstelle zu einem lokalen Peripheriegerät vorgesehen ist, was zumindest bei Peripheriegeräten wie Tastatur, Maus oder (Bildschirm-) Ausgabegeräten für fast jedes Betriebssystem der Fall ist, kann das Betriebssystem mithilfe des beschriebenen Verfahrens fernbenutzt werden.

Gemäß einer vorteilhaften Ausgestaltung des Verfahrens werden zur Datenübertragung von dem Peripheriegerät an ein in einer der virtuellen Maschinen ablaufendes Programm die folgenden Schritte ausgeführt: Es wird mindestens ein Datenpaket von dem Peripheriegerät über das Netzwerk empfangen und die in dem mindestens einem Datenpaket enthaltenen Daten werden an einer Datenschnittstelle des Peripheriegeräteadapters bereitgestellt. Die an der Datenschnittstelle des Peripheriegeräteadapters bereitgestellten Daten werden durch die Ablaufsteuerung an die logische Peripheriegeräteschnittstelle in der virtuellen Maschine übertragen, woraufhin die Daten von der logischen Peripheriegeräteschnittstelle zu dem in der virtuellen Maschine ablaufenden Programm übertragen werden.

Gemäß einer weiteren vorteilhaften Ausgestaltung des Verfahrens werden zur Datenübertragung in der umgekehrten Richtung die folgenden Schritte ausgeführt: Es werden zunächst Daten von einem in der virtuellen Maschine ablaufenden Programm an die logische Peripheriegeräteschnittstelle in der virtuellen Maschine übertragen. Danach werden die Daten an eine Datenschnittstelle des Peripheriegeräteadapters durch die Ablaufsteuerung übertragen. Abschließend werden die an den Peripheriegeräteadapter übertragenen Daten in Form von mindestens einem Datenpaket über die Netzwerkschnittstelle und das Netzwerk an das Peripheriegerät gesendet.

Beide zuvor genannte Ausgestaltungen ermöglichen die transparente Darstellung eines entfernt über das Netzwerk angeschlossenen Peripheriegerätes in ein Betriebssystem einer virtuellen Maschine oder in ein sonstiges in der virtuellen Maschine ablaufendes Programm. Für die Programme ist das über das Netzwerk angeschlossene Peripheriegerät nicht von einem lokal angebundenen Peripheriegerät zu unterscheiden, weswegen keine Kompatibilitätsprobleme auftreten. Die Zuordnung eines Peripheriegerätes in eine der virtuellen Maschinen und die Abschottung gegenüber anderen virtuellen Maschinen übernimmt die Ablaufsteuerung in der gleichen Weise, wie bei den lokal vorhandenen Hardwareressourcen.

Gemäß weiterer vorteilhafter Ausgestaltungen weisen die zwischen dem Peripheriegerät und dem Peripheriegeräteadapter übertragenen Daten ein für das Peripheriegerät spezifisches Datenformat auf und/oder werden verschlüsselt und/oder komprimiert übertragen.

Gemäß einem zweiten Aspekt der Erfindung wird die Aufgabe durch eine Ablaufsteuerung für ein virtuelles Maschinensystem in einem Computer gelöst, wobei die Ablaufsteuerung dazu eingerichtet ist, Hardwareressourcen des Computers auf logische Schnittstellen in virtuellen Maschinen abzubilden. Die Ablaufsteuerung ist weiter dazu eingerichtet, ein in dem Computer vorgesehenen Peripheriegeräteadapter auf eine logische Peripheriegeräteschnittstelle in einer der virtuellen Maschinen abzubilden. Die Vorteile dieses zweiten Aspekts der Erfindung entsprechen denen des ersten Aspekts.

Im Folgenden wird die Erfindung anhand eines Ausführungsbeispiels mit Hilfe von zwei Figuren näher erläutert.

Es zeigen:
- Figur 1: eine schematische Darstellung eines Computers mit virtuellen Maschinen und Peripheriegeräten, die über ein Netzwerk mit den virtuellen Maschinen verbunden sind und
- Figur 2: eine schematische Darstellung eines Peripheriegerätes zur Verbindung mit einer virtuellen Maschine über ein Netzwerk.

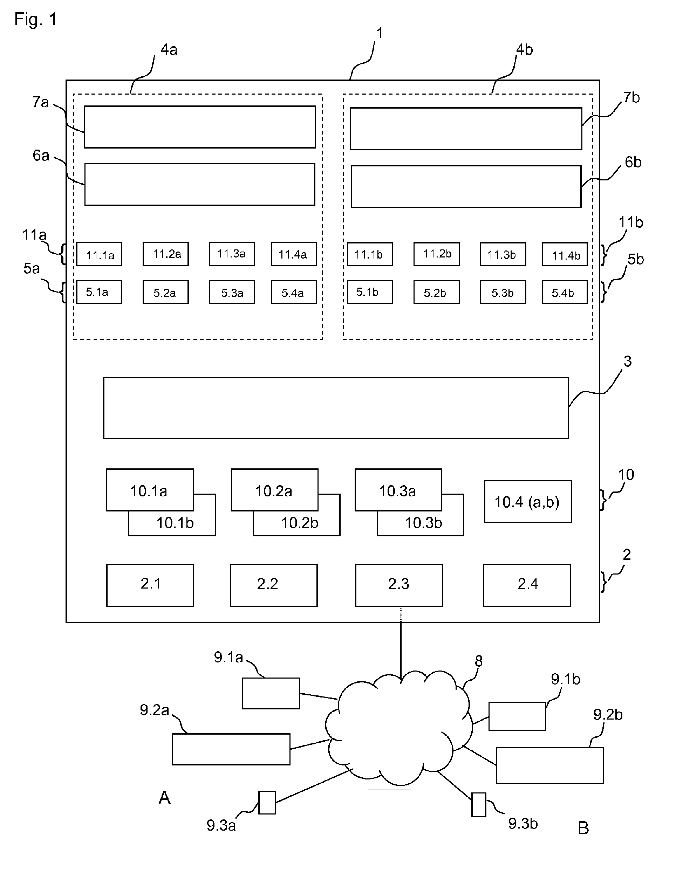

Figur 1 zeigt einen Computer 1 mit Hardwareressourcen 2.1, 2.2, 2.3 und 2.4. Im Computer 1 ist eine Ablaufsteuerung 3 vorgesehen und zwei von dieser Ablaufsteuerung 3 kontrollierte virtuelle Maschinen 4a und 4b. Die virtuellen Maschinen 4a, 4b weisen jeweils logische Schnittstellen 5.1a, 5.2a, 5.3a und 5.4a bzw. 5.1b, 5.2b, 5.3b und 5.4b auf. Jede virtuelle Maschine 4a, 4b umfasst daneben ein Betriebssystem 6a, 6b sowie Anwendungsprogramme 7a, 7b.

Der Computer 1 ist über ein Netzwerk 8 mit Peripheriegeräten 9.1a, 9.2a und 9.3a sowie 9.1b, 9.2b und 9.3b verbunden.

Darüber hinaus weist der Computer 1 die Peripheriegeräteadapter 9.1a, 9.2a, 9.3a bzw. 9.1b, 9.2b, 9.3b und 9.4 auf und die virtuellen Maschinen 4a, 4b weisen die logischen Peripheriegeräteschnittstellen 11.1a, 11.2a, 11.3a, 11.4a bzw. 11.1b, 11.2b, 11.3b und 11.4b auf.

Im Folgenden benennen Referenzzeichen ohne genauere Spezifizierung, also zum Beispiel ohne ".1" oder "a", jeweils die übergeordnete Gruppe entsprechender Elemente. Das Referenzzeichen 9a wird beispielsweise zur zusammenfassenden Bezeichnung der Peripheriegeräte 9.1a, 9.2a und 9.3a benutzt. Das Referenzzeichen 5.1 bezieht sich beispielsweise analog auf die logischen Schnittstellen 5.1a und 5.1b und das Referenzzeichen 11 umfasst alle logischen Peripheriegeräteschnittstellen, also 11.1a bis 11.4a und 11.1b bis 11.4b.

Beispielhaft zeigt die Figur ein auf dem Computer 1 basierendes virtuelles Maschinensystem vom Typ eines non-hosted Systems mit zwei virtuellen Maschinen 4. Zur Nutzung der virtuellen Maschinen 4 sind die über das Netzwerk 8 angekoppelte Peripheriegeräte 9 vorgesehen. Dabei seien beispielhaft die Geräte 9.1 Anzeigeeinheiten, z.B. mit einem Bildschirm, die Peripheriegeräte 9.2 Tastaturen und die Peripheriegeräte 9.3 Mäuse. Die Anzeigeeinheit, die Tastatur und die Maus mit dem Index a bilden einen Benutzerarbeitsplatz A für einen ersten Anwender, der die virtuelle Maschine 4a nutzt. Die entsprechenden Peripheriegeräte mit dem Index b bilden einen Benutzerarbeitsplatz B für einen zweiten Anwender, der die virtuelle Maschine 4b nutzt. Logisch sind die Peripheriegeräte 9a bzw. 9b daher mit den entsprechenden virtuellen Maschine 4a bzw. 4b verbunden.

Die Anzahl von nur zwei virtuellen Maschinen 4 ist dabei lediglich beispielhaft und nicht als Beschränkung zu verstehen. Denkbar sind virtuelle Maschinensysteme mit einer Vielzahl von virtuellen Maschinen 4 und einer entsprechend großen Anzahl von über das Netzwerk 8 angeschlossenen Peripheriegeräten 9. Bei dem Netzwerk 8 kann es sich sowohl um ein lokales Netzwerk (Intranet) oder ein globales Netzwerk (Internet) oder eine Kombination von beiden handeln. Physikalisch kann das Netzwerk als Ethernet, Token Ring oder Fiber-Channel ausgeführt sein, wobei zur Datenübertragung bevorzugt ein paketorientiertes Protokoll eingesetzt wird, beispielsweise das auf dem IP (Internet Protocol) aufsetzende verbindungsorientierte Protokoll TCP (Transmission Control Protocol) oder das ebenfalls auf dem IP aufsetzende verbindungsfreie Protokoll UDP (User Datagram Protocol).

Beim Betrieb des virtuellen Maschinensystems auf dem Computer 1 werden die Hardwareressourcen 2 durch die Ablaufsteuerung 3 als logische Schnittstellen 5 in die einzelnen virtuellen Maschinen 4 projiziert. Beispielsweise stelle die Hardwareressource 2.1 einen oder mehrere Prozessoren des Computers 1 dar. Den virtuellen Maschinen 4a und 4b wird dieser Prozessor 2.1 durch die Ablaufsteuerung 3 als virtuelle Hardwareressource in Form der logischen Schnittstellen 5.1a bzw. 5.1b bereitgestellt. Vom Betriebssystem 6a bzw. 6b oder den Anwendungsprogrammen 7a bzw. 7b kann auf den durch die logische Schnittstelle 5.1a bzw. 5.1b repräsentierten virtuellen Prozessor ebenso zugegriffen werden, wie ein Betriebssystem oder ein Anwendungsprogramm, das unmittelbar, d.h. nicht innerhalb einer virtuellen Umgebung, auf dem Computer 1 abläuft, auf den Prozessor 2.1 zugreifen könnte. In gleicher Weise werden die Hardwareressourcen 2.2 bis 2.4 durch die logischen Schnittstellen 5.2 bis 5.4 repräsentiert. Beispielhaft sei die Hardwareressource 2.2 ein Arbeitsspeicher des Computers, die Hardwareressource 2.3 eine oder mehrere Netzwerkschnittstellen und die Hardwareressource 2.4 ein oder mehrere Festplattenlaufwerke. Die zur Repräsentation der Hardwareressourcen 2 durch die logischen Schnittstellen 5 von der Ablaufsteuerung 3 eingesetzten Verfahren sind dabei bekannt und nicht Gegenstand der vorliegenden Anmeldung.

Damit die Anwender an den Benutzerarbeitsplätzen A und B über die Peripheriegeräte 9 mit den virtuellen Maschinen 4 arbeiten können, müssen Ein- bzw. Ausgabedaten zwischen den virtuellen Maschinen 4 und den Peripheriegeräten 9 übertragen werden. Erfindungsgemäß sind zu diesem Zweck die Peripheriegeräteadapter 10 in dem virtuellen Maschinensystem vorgesehen. In der Figur 1 sind die Peripheriegeräteadapter 10 als unabhängige Einheiten eingezeichnet, sie können jedoch auch in die Ablaufsteuerung 3 integriert sein. Auch wenn die einzelnen Peripheriegeräteadapter 10 letztlich einzelnen virtuellen Maschinen 4 zugeordnet sind, sind sie logisch nicht innerhalb der virtuellen Maschinen 4 angeordnet, sondern, vergleichbar mit den Hardwareressourcen 2, auf der Ebene der gemeinsam genutzten Ressourcen des Computers 1, in der auch die Ablaufsteuerung 3 arbeitet.

Die Peripheriegeräteadapter 10 sind dazu eingerichtet, über die Netzwerkschnittstelle 2.3 und das Netzwerk 8 Daten an ein Peripheriegerät 9 auszugeben bzw. von einem Peripheriegerät 9 übermittelte Daten entgegenzunehmen. Weiterhin stellen die Peripheriegeräteadapter 9 eine Datenschnittstelle bereit, an der die von einem Peripheriegerät 9 übermittelten Daten abgerufen werden können, bzw. an die Daten übertragen werden können, die an ein Peripheriegerät 9 zu übermitteln sind.

Die Peripheriegeräteadapter 10 sind mit so genannten Geräte-Treibern vergleichbar. Geräte-Treiber sind Softwarebausteine, die meist als Hintergrundprozesse ausgeführt werden und Daten von einem an einem vorbestimmten Anschluss eines Computers angeschlossenen Gerät entgegennehmen und die Daten in einer (meist) standardisierten Form zur Weiterverarbeitung bereitstellen, bzw. umgekehrt Daten in einer (meist) standardisierten Form entgegennehmen und über den vorbestimmten Anschluss an das Gerät weiterleiten. Das Entgegennehmen der Daten oder das Bereitstellen zur Weiterverarbeitung kann über eine so genannte Programmierschnittstelle erfolgen, über die ein Betriebssystem oder ein Anwendungsprogramm Routinen des Geräte-Treibers aufrufen kann und zu übertragende Daten den Routinen als Parameter übergeben kann. Zur Parameterübergabe kann gegebenenfalls auch ein vordefinierter Speicherbereich genutzt werden. Das Format, in dem Daten vom Geräte-Treiber zum Gerät übertragen werden, ist üblicherweise gerätespezifisch. Durch die Umsetzung in den Geräte-Treibern wird jedoch erreicht, dass Programme in standardisierter Form auf Geräte zugreifen können, unabhängig davon, welche physikalische Schnittstelle und welche Art bzw. welches Datenformat bei der Datenübertragung zwischen dem Computer und dem Gerät genutzt wird.

Ebenso wie Geräte-Treiber sind die Peripheriegeräteadapter 10 spezifisch an ein bestimmtes Peripheriegerät 9 angepasst. Bei dem in der Figur 1 gezeigten Ausführungsbeispiel ist für jedes Peripheriegerät 9 je ein Peripheriegeräteadapter 10 vorgesehen. Beispielsweise ist für das Peripheriegerät 9.2b, der Tastatur am Benutzerarbeitsplatz B, der Peripheriegeräteadapter 10.2b vorgesehen und für das Peripheriegerät 9.3b, der Maus am Benutzerarbeitsplatz B, der Peripheriegeräteadapter 10.3b. Für die entsprechenden Peripheriegeräte 9.2a und 9.3a am Benutzerarbeitsplatz A sind analog die Peripheriegeräteadapter 10.2a und 10.3a vorgesehen. Bei Peripheriegeräteadaptern mit vergleichbarer Funktion, also z.B. bei den Peripheriegeräteadaptern 10.3a und 10.3b kann es sich um zwei Instanzen desselben Adapters handeln, falls die angeschlossenen Peripheriegeräte 9.3a und 9.3b gleich oder kompatibel sind, oder andernfalls auch um Instanzen verschiedener Adapter.

Eine alternative Ausführungsform zeigt der Peripheriegeräteadapter 10.4. Hier ist für mehrere gleiche oder kompatible, in der Figur nicht gezeigte Peripheriegeräte nur ein Adapter vorgesehen, der jedoch an seinem Ausgang, zum Beispiel der Programmierschnittstelle, zwischen den verschiedenen Peripheriegeräten, denen er zugeordnet ist, differenziert.

Um eine eindeutige Zuordnung zwischen den Peripheriegeräten 9 und den Peripheriegeräteadaptern 10 zu ermöglichen, sind die Peripheriegeräte 9 mit einer eindeutigen Kennung, zum Beispiel einer Identifikationsnummer, ausgestattet. Diese Kennung wird bei jedem Datenaustausch zwischen den Peripheriegeräten 9 und den Peripheriegeräteadaptern 10 übertragen. Bei der im Netzwerk 8 vorgesehen Datenübertragung in Form von Datenpaketen ist dann beispielsweise jedes ausgetauschte Datenpaket mit der Kennung des Peripheriegerätes 9 oder des jeweiligen Peripheriegeräteadapters 10 versehen. Eine Form der Kennung ist bereits durch die Netzwerkadresse, die jedem Gerät in einem Netzwerk in eindeutiger Form zugewiesen sein muss, gegeben. Unabhängig davon oder zusätzlich dazu kann eine fest dem jeweiligen Gerät zugeordnete Identifikationsnummer angesetzt werden, zum Beispiel die MAC (media access control)-Adresse, die herstellerseitig einem jeden Netzwerkadapter (-schnittstelle, -karte) zugewiesen wird und diesen weltweit eindeutig auszeichnet.

Erfindungsgemäß ist zur Datenübertragung zwischen den Peripheriegeräten 9 und den virtuellen Maschinen 4 ein zweistufiges Abbildungsverfahren vorgesehen. Die erste Stufe wird durch die Peripheriegeräteadapter 10 realisiert, die zweite Stufe besteht in der Abbildung der Datenschnittstellen der Peripheriegeräteadapter 10 auf die logischen Peripheriegeräteschnittstellen 11 in einzelne virtuelle Maschine 4 durch die Ablaufsteuerung 3. Diese Abbildung erfolgt analog zur Abbildung der Hardwareressourcen 2 auf die logischen Schnittstellen 5 in den virtuellen Maschinen 4. Auf die logischen Peripheriegeräteschnittstellen 11 kann das Betriebssystem 6 oder ein Anwendungsprogramm 7 in einer der virtuellen Maschinen 4 ebenso zugreifen, wie ein Betriebssystem oder ein Anwendungsprogramm, das unmittelbar auf dem Computer 1 abläuft, auf ein durch einen Geräte-Treiber vertretenes Peripheriegerätgerät zugreifen würde.

Im Folgenden wird die Übertragung von Daten zwischen einem der Peripheriegeräte 9 und einer der virtuellen Maschinen 4 an zwei Beispielen detaillierter beschrieben.

Der Tastendruck eines Anwenders am Benutzerarbeitsplatz A auf die an das Netzwerk 8 angeschlossene Tastatur 9.2a führt beispielsweise zur Erzeugung eines der Taste zugeordneten Tastencodes in der Tastatur 9.2a. Von einer in der Tastatur 9.2a vorgesehenen oder dieser nachgeschalteten Netzwerkschnittstelle wird der Tastencode in ein Datenpaket eingebettet und dieses mit der Netzwerkadresse der Netzwerkschnittstelle als Absenderadresse versehen und über das Netzwerk 8 und die Netzwerkschnittstelle 2.3 an den Peripheriegeräteadapter 10.2a des virtuellen Maschinensystems gesendet. Zu diesem Zweck ist die Adresse der Netzwerkschnittstelle 2.3 des Computers 1 der Netzwerkschnittstelle der Tastatur 9.2b bekannt, z.B. anhand einer Konfiguration mittels manueller Einstellmöglichkeiten an der Tastatur 9.2a oder indem die Adresse einmalig über das Netzwerk 8 an die Netzwerkschnittstelle der Tastatur 9.2a zur Konfiguration derselben gesendet wird.

Ein solches von der Netzwerkschnittstelle 2.3 des Computers 1 empfangenes Datenpaket wird danach anhand der im Datenpaket enthaltenen Absenderadresse als von der Tastatur 9.2a stammendes Datenpaket identifiziert. Der im Datenpaket enthaltene Tastaturcode wird extrahiert und dem zuständigen Peripheriegeräteadapter 10.2a zugeführt. Diese Zuweisung kann unter Zuhilfenahme der Ablaufsteuerung 3 erfolgen, in der die Tastatur 9.2a und der Peripheriegeräteadapter 10.2a registriert und einander zugeordnet sind. Beispielsweise kann vorgesehen sein, dass die Datenpakete von der Tastatur 9.2a mit einer vorbestimmten, den Peripheriegeräten 9 zugeordneten und vorbehaltenen Portnummer an das virtuelle Maschinensystem gesendet werden. Die Portnummer stellt im IP-Protokoll eine Unteradresse dar, die üblicherweise zur Unterscheidung zwischen verschiedenen Diensten (Webserver, FTP-Server, Datenbankserver, usw.) eingesetzt wird. Die Ablaufsteuerung 3 kann dann entsprechend dazu eingerichtet sein, auf den vorbestimmten Port zu "lauschen" und an den Port mit der vorbestimmten Portnummer gerichtete Datenpakete entgegenzunehmen.

Die Reaktion auf eine Tastatureingabe wird bei Computern üblicherweise von einem Tastatur-Treiber über den Aufruf einer vordefinierten Interrupt-Routine gesteuert. Entsprechend ist der Adapter 10.2a dazu eingerichtet, nach Detektion eines von der Tastatur 9.2a übermittelten Tastencodes einen entsprechenden Interrupt-Aufruf an seinem Ausgang, der Datenschnittstelle, auszugeben.

Da der Peripheriegeräteadapter 10.2a von der Ablaufsteuerung 3 auf die logische Peripheriegeräteschnittstelle 11.2a in die virtuelle Maschine 4a abgebildet wird, wird der ausgegebene Interrupt-Aufruf folglich in die virtuelle Maschine 4a weitergeleitet. Innerhalb der virtuellen Maschine 4a führt der Interrupt-Aufruf in bekannter Art und Weise dazu, dass eine in dem Betriebssystem 6a vorgesehene Routine zur Interrupt-Behandlung den Tastaturcode entgegennimmt, anhand einer Tastaturtabelle ein dem Tastencode zugeordneten Zeichencode ermittelt und weiterverarbeitet. Für die virtuelle Maschine 4a stellt sich der über das Netzwerk 8 empfangene Tastencode genauso dar, als sei er von einer in der üblicher Weise lokal an den PS/2 (Personal System 2)- oder einen USB (Universal Serial Bus)-Anschluss eines Computer angeschlossenen Tastatur ausgegeben worden. Die Übertragung der Daten von der Tastatur 9.2a über das Netzwerk 8 erfolgt in Form von Tastencodes, auch Scancodes genannt, die in ein netzwerktaugliche Pakete des genutzten Netzwerkprotokolls eingepackt sind. Tastencodes stellen das bei handelsüblichen PC-Tastaturen typische und gebräuchliche Datenausgabeformat dar. In diesem Sinn ist erfolgt im Ausführungsbeispiel die Übertragung der Daten vom Peripheriegerät 9 zu dem Computersystem 1 in dem für das Peripheriegerät 9 spezifischen Datenformat.

Dieses bietet den Vorteil, dass am Benutzerarbeitsplatz A keine Umwandlung der von der Tastatur 9.2a ausgegebenen Daten in ein spezielles Datenformat erfolgen muss. Bei den bekannten Lösungen, bei denen eine Übertragung von Ein- und Ausgabedaten gemäß einem speziellen Protokoll über eine eigens zu dem Zweck der Fernbenutzung vorgesehene Schnittstelle eines Betriebssystem direkt in dieses Betriebssystem erfolgt, ist auf der Seite des Benutzerarbeitsplatzes A eine entsprechende Datenumwandlung erforderlich. Der dafür üblicherweise benötigte Standard-PC oder Thin-Client ist bei dem anmeldungsgemäßen Verfahren entbehrlich. Stattdessen können am Benutzerarbeitsplatz Peripheriegeräte 9 eingesetzt werden, die auf Standard-Komponenten basieren und zusätzlich lediglich eine Netzwerkschnittstelle aufweisen müssen.

Als weiterer Vorteil ergibt sich, dass auch Betriebssysteme, die die gemäß dem Stand der Technik erforderliche spezielle Schnittstelle zur Fernbenutzung nicht aufweisen, mit dem erfindungsgemäßen Verfahren mit entfernten, über das Netzwerk 8 angebundenen Peripheriegeräten 9 betrieben werden können. Das Verfahren bedient sich der Schnittstellen eines Betriebssystems, die auch lokale, direkt angeschlossene Peripheriegeräte nutzen würden. Wenn eine solche Schnittstelle vorhanden ist, was zumindest bei Peripheriegeräten wie Tastatur, Maus oder (Bildschirm-) Ausgabegeräten für fast jedes Betriebssystem der Fall ist, kann das Betriebssystem mithilfe des beschriebenen Verfahrens fernbenutzt werden.

Wenn der einem Zeichen einer Taste zugeordnete Zeichencode übertragen wird, ist wegen der am Benutzerarbeitsplatz A erforderlichen Umsetzung vom Tastencode in den Zeichencode eine entsprechende Konfiguration der Tastatur unumgänglich. Es ist beispielsweise die Tastenbelegung und das gewünschte Ausgabeformat des Zeichencodes, z.B. ASCII (American Standard Code for Information Interchange) oder UTF (Unicode Transformation Format), vom Anwender am Benutzerarbeitsplatz A festzulegen. Dagegen ist außer der oben angeführten Konfiguration der Netzwerkadresse, an die die Tastatur 9.2a ihre Datenpakete schickt, beim Ausführungsbeispiel keine Konfiguration am Benutzerarbeitsplatz A notwendig. Einstellungen zur Tastatur, z.B. die Zuordnung von Taste zu Tastencode, werden im Betriebssystem der virtuellen Maschine 4 durch Auswahl einer passenden Tastaturbelegungstabelle durchgeführt. Dieses kann auf einfache Weise zentral von einem Administrator des virtuellen Maschinensystems durchgeführt werden und belastet den Anwender am Benutzerarbeitsplatz A nicht. Insbesondere bei Peripheriegeräten mit umfangreichen Einstellungsmöglichkeiten stellt dieses einen großen Vorteil in der Vereinfachung der Fernbenutzung des virtuellen Maschinensystems dar.

Auch ist denkbar, dass manche Einstellungen bereits auf Ebene der Peripherieadapter 10 von einem Administrator des Computers 1 vorgenommen werden. Derart über ihre Peripherieadapter 10 bereits vorkonfigurierte entfernte Peripheriegeräte 9 können dann ohne jede weitere Konfiguration mit beliebigen Betriebssystemen 6 und Anwendungsprogrammen 7 verwendet werden. Möglich ist dieses letztlich dadurch, dass eine Übertragung der Daten vom Peripheriegerät 9 zum Peripheriegeräteadapter 10 in dem für das Peripheriegerät 9 spezifischen Datenformat erfolgt und somit alle Konfigurationsmöglichkeiten im virtuellen Maschinensystem liegen.

Als weiteres Beispiel ist im Folgenden die Grafikausgabe eines Anwendungsprogramms 7a der virtuellen Maschine 4a auf die entfernte Anzeigeeinheit 9.1a am Benutzerarbeitsplatz A dargestellt.

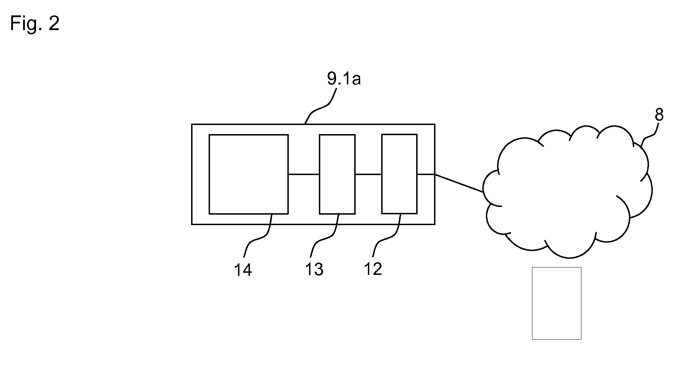

Figur 2 zeigt eine schematische Ansicht einer geeigneten Ausgabeeinheit 9.1a. Die Ausgabeeinheit 9.1a weist eine Netzwerkschnittstelle 12, damit verbunden eine Grafikkarte 13 und einen mit dieser verbundenen Monitor 14 auf.

Dem Anwendungsprogramm 7a, bzw. dem zwischengeschalteten Betriebssystem 6a stellt sich die logische Peripheriegeräteschnittstelle 11.1a als standardisierte Grafikschnittstelle, zum Beispiel nach dem VGA (Video Graphics Array)- oder dem XGA (Extended Graphics Array)-Standard dar. Gemäß dieser Standards werden Routinen bereitgestellt, über die eine Text- und Grafikausgabe in einer bestimmten festgelegten Auflösung und Farbtiefe auf einem Bildschirm ermöglicht wird.

Durch die Ablaufsteuerung 3 wird die logische Peripheriegeräteschnittstelle 11.1a wiederum auf den Peripheriegeräteadapter 10.1a abgebildet. Diese Abbildung führt hier dazu, dass die an die logische Peripheriegeräteschnittstelle 11.1a übergebenen Befehle an den Peripheriegeräteadapter 10.1a weitergeleitet werden. Der Peripheriegeräteadapter 10.1a ist dazu eingerichtet, diese Befehle über die Netzwerkschnittstelle 2.3 und das Netzwerk 8 in Datenpakete verpackt an das ihm zugeordnete Peripheriegerät, die Anzeigeeinheit 9.1a, weiterzuleiten. Auch hier wird die Zuordnung zwischen Peripheriegeräteadapter 10.1a und Anzeigeeinheit 9.1a durch die Ablaufsteuerung 3 verwaltet, in der auch die zur Übermittlung der Datenpakete notwendige Adresse der Netzwerkschnittstelle 12 der Anzeigeeinheit 9.1a hinterlegt ist. Dabei kann zusätzlich vorgesehen sein, die Übermittlung der Datenpakete aus Sicherheitsgründen zu verschlüsseln und/oder aus Performancegründen eine Datenkomprimierung vorzunehmen. Zur verschlüsselten Übertragung ist beispielsweise das SSL (Secure Sockets Layer)-Protokoll geeignet. Die von der Netzwerkschnittstelle 12 der Anzeigeeinheit 9.1a empfangenen Datenpakete werden, gegebenenfalls entschlüsselt und dekomprimiert, an die Graphikkarte 13 weitergeleitet.

Die Grafikkarte 13 führt nun die vom Anwendungsprogramm 7a abgegebenen Befehle aus und schreibt entsprechend dieser Befehle Inhalte in einen Bildschirmspeicher, der auf der Grafikkarte 13 vorgesehen ist. In bekannter Weise wird der Inhalt dieses Bildschirmspeichers dann von der Grafikkarte 13 kontinuierlich in entsprechende analoge oder digitale Grafiksignale umgewandelt, die dem Monitor 14 zugeführt und somit am Benutzerarbeitsplatz A sichtbar gemacht werden.

Auch bei diesem Beispiel erfolgt die Übertragung der Daten vom Peripheriegeräteadapter 10 zum Peripheriegerät 9 in einem für das Peripheriegerät 9 spezifischen Datenformat, hier dem Befehlssatz der Graphikkarte 13 der Anzeigeneinheit 9.1a. Wiederum ergibt sich als Vorteil, dass im Gegensatz zu einem System, bei dem die Graphikkarte 13 Teil eines zwischengeschalteten lokalen Computers ist, über den Informationen zwischen den Peripheriegeräten 9 und der virtuellen Maschine 4 gemäß dem Stand der Technik ausgetauscht werden, keine Konfiguration auf Seiten des Benutzerarbeitsplatzes A notwendig ist.

### Bezugszeichenliste

- 1: Computer
- 2: Hardwareressourcen
- 2.3: Netzwerkschnittstelle
- 3: Ablaufsteuerung
- 4: virtuelle Maschinen
- 5: logische Schnittstellen
- 6: Betriebssysteme
- 7: Anwendungsprogramme
- 8: Netzwerk
- 9: Peripheriegeräte
- 9.1: Anzeigeeinheit
- 9.2: Tastatur
- 9.3: Maus
- 10: Peripheriegeräteadapter
- 11: logische Peripheriegeräteschnittstellen
- 12: Netzwerkschnittstelle
- 13: Graphikkarte
- 14: Monitor
- A, B: Benutzerarbeitsplätze

## Patentansprüche

1. Verfahren zur Datenübertragung in einem System mit einem Computer (1) und einem Peripheriegerät (9), wobei
- der Computer Hardwareressourcen (2), darunter eine Netzwerkschnittstelle (2.3), und eine Ablaufsteuerung (3) aufweist,
- die Ablaufsteuerung (3) dazu eingerichtet ist, ein virtuelles Maschinensystem bereitzustellen, indem sie die Hardwareressourcen (2) einschließlich der Netzwerkschnittstelle (2.3) auf logische Schnittstellen (5, 5.3) in virtuellen Maschinen (4) abbildet und
- der Computer (1) und das Peripheriegerät (9) mit einem Netzwerk (8) verbunden sind,
mit den folgenden Schritten:
- Abbilden eines im Computer (1) vorgesehenen Peripheriegeräteadapters (10) auf eine logische Peripheriegeräteschnittstelle (11) in einer der virtuellen Maschinen (4) durch die Ablaufsteuerung (3)und
- Austauschen von Daten zwischen dem Peripheriegerät (9) und der virtuellen Maschine (4) über das Netzwerk (8), die Netzwerkschnittstelle (2.3), den Peripheriegeräteadapter (10) und die logische Peripheriegeräteschnittstelle (11) unter Umgehung der die Netzwerkschnittstelle (2.3) in den virtuellen Maschinen (4) abbildenden logischen Schnittstellen (5.3).

2. Verfahren nach Anspruch 1, wobei zur Datenübertragung von dem Peripheriegerät (9) an ein in einer der virtuellen Maschinen (4) ablaufendes Programm
die folgenden Schritte ausgeführt werden:
- Empfangen von mindestens einem Datenpaket von dem Peripheriegerät (9) über das Netzwerk (8),
- Bereitstellen von in dem mindestens einem Datenpaket enthaltenen Daten an einer Datenschnittstelle des Peripheriegeräteadapters (10),
- Übertragen der an der Datenschnittstelle des Peripheriegeräteadapters (10) bereitgestellten Daten an die logische Peripheriegeräteschnittstelle (11) in der virtuellen Maschine (4) durch die Ablaufsteuerung (3) und
- Übertragen der Daten von der logischen Peripheriegeräteschnittstelle (11) zu dem in der virtuellen Maschine (4) ablaufenden Programm.

3. Verfahren nach Anspruch 1, wobei zur Datenübertragung von einem in einer der virtuellen Maschinen (4) ablaufenden Programm an das Peripheriegerät (9) die folgenden Schritte ausgeführt werden:
- Übertragen von Daten von einem in der virtuellen Maschine (4) ablaufenden Programm an die logische Peripheriegeräteschnittstelle (11) in der virtuellen Maschine (4),
- Übertragen der Daten an eine Datenschnittstelle des Peripheriegeräteadapters (10) durch die Ablaufsteuerung (3) und
- Senden der an den Peripheriegeräteadapter (10) übertragenen Daten in Form von mindestens einem Datenpaket über die Netzwerkschnittstelle (2.3) und das Netzwerk (8) an das Peripheriegerät (9).

4. Verfahren nach einem der Ansprüche 1 bis 3, bei dem die zwischen dem Peripheriegerät (9) und dem Peripheriegeräteadapter (10) übertragenen Daten ein für das Peripheriegerät (9) spezifisches Datenformat aufweisen.

5. Verfahren nach einem der Ansprüche 1 bis 4, bei dem Daten zwischen dem Peripheriegerät (9) und dem Peripheriegeräteadapter (10) verschlüsselt übertragen werden.

6. Verfahren nach einem der Ansprüche 1 bis 5, bei dem Daten zwischen dem Peripheriegerät (9) und dem Peripheriegeräteadapter (10) komprimiert übertragen werden.

7. Ablaufsteuerung (4) für ein virtuelles Maschinensystem in einem Computer (1), wobei die die Ablaufsteuerung (4) dazu eingerichtet ist, Hardwareressourcen (2) des Computers (1) auf logische Schnittstellen (5) in virtuellen Maschinen (4) abzubilden,
**dadurch gekennzeichnet, dass**
die Ablaufsteuerung (4) weiter dazu eingerichtet ist, ein in dem Computer (1) vorgesehenen Peripheriegeräteadapter (10) auf eine logische Peripheriegeräteschnittstelle (11) in einer der virtuellen Maschinen (4) abzubilden.
